# EUROPÄISCHE PATENTSCHRIFT

(11) **EP 3 793 828 B1**
(45) Veröffentlichungstag und Bekanntmachung des Hinweises auf die Patenterteilung: **20.07.2022**
(21) Anmeldenummer: 20753745.7
(22) Anmeldetag: 07.08.2020
(51) Int. Cl.: B29C 45/14, B29C 51/14, B32B 38/18, B32B 37/12

(54) **KUNSTSTOFFVERBUNDBLENDE SOWIE ZUGEHÖRIGES HERSTELLUNGSVERFAHREN**
PLASTICS COMPOSITE PANEL AND ASSOCIATED PRODUCTION METHOD
PANNEAU COMPOSITE À BASE DE MATIÈRE PLASTIQUE ET PROCÉDÉ DE FABRICATION ASSOCIÉ

(30) Priorität: 08.08.2019 DE 102019121403; 22.01.2020 DE 102020101458; 22.01.2020 DE 102020101464; 22.01.2020 DE 102020101462; 15.06.2020 DE 102020115719
(43) Veröffentlichungstag der Anmeldung: 24.03.2021
(73) Patentinhaber: Preh GmbH, 97616 Bad Neustadt a.d. Saale (DE)
(72) Erfinder: LOCHNER, Peter, 97618 Wollbach (DE); NEUBAUER, Steffen, 97618 Hohenroth (DE); RÜCKERT, Benedikt, 97631 Bad Königshofen (Unteressfeld) (DE); SÜNNEMANN, Martin, 97633 Höchheim (DE)
(74) Vertreter: Lohmanns, Bernard
(86) Internationale Anmeldenummer: PCT/EP2020/072250
(87) Internationale Veröffentlichungsnummer: WO 2021/023864

(56) Entgegenhaltungen:
- WO-A1-2007/081915
- WO-A1-2012/013631
- WO-A1-2018/188939

## Beschreibung

Die Erfindung betrifft eine Kunststoffverbundblende mit einer Oberfläche, die die Oberfläche eines geschliffenen Diamanten imitiert sowie ein zugehöriges Herstellungsverfahren. Derzeit ist die Verwendung von aus Glaswerkstoffen bestehenden Blenden aus vielerlei Gründen bevorzugt. Einerseits lassen sich mit Glas mit hoher Präzision solche Oberflächen erzeugen, die eine geschliffene Oberfläche eines Diamanten imitieren, andererseits wird aufgrund der hohen Transparenz des Glaswerkstoffs und der Anmut der dadurch erzeugten Oberflächen eine solch Glasoberfläche vom Betrachter üblicherweise als sehr wertig empfunden. Nachteilig ist die vergleichsweise teure Herstellung sowie das Gewicht solcher Blenden, insbesondere wenn die Blende eine gewisse Dicke aufweisen muss, so dass die sich aus der Diamantstruktur ergebenden dreidimensionalen Oberflächenkonturen in die Blende integriert werden können. Andererseits ergibt sich aus der Bruchgefahr und der damit einhergehenden Splitterbildung ein nicht unerhebliches Verletzungsrisiko, so dass sich die Integration von aus ganz oder teilweise aus Glaswerkstoffen bestehenden Blenden in den Bereich des Armaturenbretts in Kraftfahrzeugen verbietet. Die Herstellung einer Blende aus Kunststoff birgt das Risiko, dass die Blende nicht über die gesamte Ausdehnung den gleichmäßigen Transparenzgrad erreicht, wie eine Blende aus einem Glaswerkstoff und beispielswese lokale Eintrübungen aufweist. Insbesondere die für eine realistisch wirkende Imitation der Diamantstruktur notwendige Nachbildung der scharfen Kantenübergänge ist meist nicht zu erreichen und lässt das Resultat oft nicht optisch attraktiv erscheinen.

Ein Verfahren zur Herstellung einer Kunststoffverbundblende sowie eine zugehörige Kunststoffverbundblende gemäß der Oberbegriffe der Ansprüche 1 und 12 sind aus der WO 2007/081915 A1, der WO 2018/188939 A1 und der WO 2012/013631 A1 bekannt.

Vor diesem Hintergrund bestand Bedarf nach einem Verfahren zur Herstellung einer gattungsgemäßen Kunststoffverbundblende, die vergleichsweise leicht, haltbar ist und eine hochwertige Erscheinung aufweist, die denen aus Glaswerkstoffen zumindest nahekommt, die nach der Herstellung und in der Verwendung dauerhaft maßhaltig ist. Diese Aufgabe wird durch ein Herstellungsverfahren gemäß Anspruch 1 gelöst. Eine gleichermaßen vorteilhafte Verwendung sowie eine entsprechend vorteilhafte Kunststoffverbundblende sind jeweils Gegenstand der nebengeordneten Ansprüche. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Verfahren zur Herstellung einer einen Schichtaufbau aufweisenden Kunststoffverbundblende insbesondere für ein Kraftfahrzeug. Erfindungsgemäß ist ein Schritt des Bereitstellens vorgesehen, bei dem ein Folienschichtaufbau bereitgestellt wird, der mehreren transparente Kunststofffolien und zwischen zwei benachbarten Kunststofffolien des Folienschichtaufbaus angeordnete Klebstoffschicht aufweist, um die zwei Kunststofffolien zu verbinden, bevorzugt stoffschlüssig zu verbinden. Erfindungsgemäß ist die wenigstens eine Klebstoffschicht aus einem nicht vollständig verfestigten, aber zumindest im verfestigten Zustand transparenten Klebstoff ausgebildet. Der Folienschichtaufbau weist zwei sich in Stapelrichtung seiner aus Kunststofffolien und Klebstoffschicht gebildeten Schichten beabstandete Hauptflächen, eine erste und zweite Hauptfläche auf. Der Folienschichtaufbau definiert dabei die größte Ausdehnung. Der Begriff Kunststofffolie ist weit auszulegen, so dass eine zusätzliche Beschichtung nicht ausgeschlossen ist. Beispielsweise ist die Folie jeweils aus einem thermoplastischen Kunststoff, bevorzugt einem Polycarbonat oder einem Polymethylmethacrylat oder einem Polyethylenterephthalat ausgebildet. Erfindungsgemäß ist eine der Kunststofffolien transluzent metallisch beschichtet, bevorzugt nichtleitend metallisch beschichtet. Daraus ergibt sich beispielsweise eine dekorative, hauchdünne (Schichtdicke < 20µm) metallisch glänzende Lichteffektschicht, so dass ein semitransparenter (Transmission ca. 5% bis 25% im sichtbareren Bereich) Spiegeleffekt entsteht. Solche Schichten können beispielsweise durch physikalische Gasphasenabscheidung (englisch Physical Vapor Deposition, kurz PVD) oder, falls die Lichteffektschicht elektrisch nichtleitend sein soll, durch Kombination von PVD und Lack (NCVM - non conductive vapor metallization) erhalten werden. Jede der Kunststofffolien ist optional durch einen Rolle-zu-Rolle-Auftrag beschichtet. Beispielsweise ist wenigstens eine Kunststofffolie antireflex-, kratzfest- oder die Abriebfestigkeit steigernd beschichtet. Durch den Rolle-zu-Rolle Auftrag ist eine besonders gleichmäßige Beschichtung, mit entsprechenden gleichmäßigen optischen Eigenschaften möglich. Die Dicke des Folienschichtaufbaus in Stapelrichtung seiner Schichten bzw. Folien beträgt beispielsweise zwischen 0,125 mm bis 0,50 mm, bevorzugt 0,20 mm bis 0,30 mm.

Erfindungsgemäß wird der bereitgestellte Folienschichtaufbau vorgeformt, so, dass dieser eine lediglich an eine endgültige Formgebung angenäherte Formgebung aufweist, also die angenäherte Formgebung nicht deckungsgleich mit der endgültigen Formgebung ist. Beispielsweise ist eine angenäherte Formgebung dann erreicht, wenn zumindest die örtliche Verteilung der Höhen und Tiefen über die Hauptflächen des Folienschichtaufbaus bei angenäherter und endgültiger Formgebung übereinstimmt. Bevorzugt handelt es sich bei dem Vorformen um ein thermisches Umformen und/oder isostatischen Hochdruckumformen des Folienschichtaufbaus. Beispielsweise wird ein beim Bereitstellen passend zugeschnittenes, ebenes Stück des Folienschichtaufbaus bereitgestellt und mittels des Vorformens dreidimensional vorgeformt.

Nach dem Vorformen wird der vorgeformte Folienschichtaufbau in einem formgebenden Werkzeug angeordnet. Beim Anordnen des Folienschichtaufbaus in dem formgebenden Werkzeug ist dieser mit einer ersten seiner zwei Hauptflächen an eine spezifische formgebende Oberfläche des formgebenden Werkzeugs zugewandt angeordnet. Die spezifische, formgebende Oberfläche zeichnet sich dadurch aus, dass sie eine oder mehrere dreidimensionale Konturen als Erhebung und/oder Vertiefung ausbildet, die aus ebenen, gewinkelt zueinander stehenden, in geradlinigen Kanten aneinandergrenzenden Flächen gebildet ist, also insgesamt betrachtet die Oberflächenkontur eines oder mehrerer geschliffener Diamanten imitiert. Die Rauheit der formgebenden Oberfläche ist beispielsweise VDI 3400 Ref 12 oder besser.

Bei dem Anordnen des Folienschichtaufbaus in dem formgebenden Werkzeug wird zwischen der der ersten Hauptfläche abgewandten, zweiten Hauptfläche und dem formgebenden Werkzeug eine Cavität ausgebildet, wohingegen die aus der lediglichen angenäherten Formgebung der Folienschichtaufbau resultierende verbleibende Cavität zwischen der ersten Hauptfläche des Folienschichtaufbaus und der formgebenden Oberfläche aufgrund fehlender vollflächiger angrenzender Anordnung der beiden, durch den nachfolgend erläuterten Hinterspritzschritt reduziert wird.

Erfindungsgemäß erfolgt ein nachfolgendes Hinterspritzen des Folienschichtaufbaus in einem thermisch formgebenden Verfahrensschritt unter Einbringen eines spätestens im erstarrten Zustand transparenten Thermoplasts, wie Polycarbonat, in die erste Cavität, um den Schichtaufbau als Formling zu erzeugen und die angrenzende Annäherung, bevorzugt ein höheres Maß an Annäherung im Vergleich zur vorgeformten Formgebung, noch bevorzugter eine vollflächige Annäherung der ersten Hauptfläche des Folienschichtaufbaus an die formgebende Oberfläche zu bewirken. Anders ausgedrückt wird der Folienschichtaufbau bei diesem Vorgang ein weiteres Mal, wenn auch möglicherweise geringfügig, verformt und der Folienschichtaufbau übernimmt insbesondere die gewünschten scharfen, geradlinigen, von der formgebenden Oberfläche vorgegebenen Kanten zwischen zwei aneinandergrenzender im Wesentlichen ebenen Flächen. Der erhaltene Schichtaufbau weist wenigstens eine erste, äußere, zum Folienschichtaufbau gehörige Kunststofffolie, eine zweite, zum Folienschichtaufbau gehörige Kunststofffolie eine zwischen erster und zweiter Kunststofffolie sich erstreckende Klebstoffschicht und eine an eine zweite Hauptfläche des Folienschichtaufbaus angrenzende, durch den Thermoplast ausgebildete Thermoplastschicht auf.

Beim Vorformen und/oder beim Hinterspritzen wird gleichzeitig ein Verfestigen der Klebstoffschicht bewirkt, wobei der Folienschichtaufbau entsprechend der spezifischen formgebenden Oberfläche ausgeformt stabilisiert wird. Als ein Verfestigen wird ein chemisches oder physikalisches Härten des Klebstoffs verstanden, was im Allgemeinen mit einem Viskositätsverlust einhergeht. Beispielsweise handelt es sich um einen wärmehärtenden Klebstoff oder die Verfestigung wird durch Bestrahlung, beispielsweise UV-Licht, bewirkt.

Nach dem Erstarren der Thermoplastschicht wird der Folienschichtaufbau entnommen und zur Kunststoffverbundblende weiterverarbeitet oder als Kunststoffverbundblende montiert. Die erzeugte Kunststoffverbundblende imitiert in optisch idealer Weise die Diamantstruktur des formgebenden Werkzeugs. Es ist somit eine Kunststoffverbundblende mit idealen optischen Eigenschaften herstellbar. Dies wird auf die Verwendung eines mehrere Kunststofffolien und eine Klebstoffschicht beinhaltenden Folienschichtaufbaus als die Oberflächengestalt des formgebenden Werkzeugs primär aufnehmenden Bauteils der Kunststoffverbundblende zurückgeführt. Die optischen Eigenschaften der Kunststofffolien des Folienschichtaufbaus bleiben über deren Verlauf im Folienschichtaufbau trotz der Weiterverarbeitung im formgebenden Verfahren aufgrund der stabilisierenden Wirkung der Klebstoffschicht bzw. Klebstoffschichten erhalten. Ferner können optisch beeinflussende Beschichtungen, wie die Lichteffektschicht und/oder Lackschichten besonders gleichmäßig auf die Folien gegebenenfalls noch vor Erzeugen des Folienschichtaufbaus, also noch vor Verbinden der Folien mit den Klebeschichten auf die einzelne separierte Folie aufgebracht werden. Diese Aufbringung kann gegebenenfalls mit vergleichsweise einfachen Verfahren, wie ein Rolle-zu-Rolle-Auftrag auf die noch eben ausgerichtete Folie aufgebracht werden, ohne die gewünscht optisch attraktiven Eigenschaften im Gesamtaufbau der Kunststoffverbundblende zu gefährden.

Gemäß einer bevorzugten Variante des Verfahrens erfolgt das Vorformen in einem vorformgebenden Werkzeug mit einer vorformgebenden Oberfläche, wobei diese, sofern sie nicht kantenfrei ist, nur solche Kanten, hier zur besseren Unterscheidung als Vorkanten bezeichnet, aufweist, die jeweils einen Radius aufweisen, der größer, bevorzugt ein Vielfaches größer als der Radius der entsprechenden Kante der formgebenden Oberfläche des zeitlich nachgeschalteten Hinterspritzschrittes ist. Anders ausgedrückt die Vorkanten der vorformenden Oberfläche sind gegenüber den an entsprechender Stelle angeordneten Kanten der formgebenden Oberfläche "verrundet". Es stellt sich somit in zwei Stufen am Ort der Kanten eine Krümmung im Folienschichtaufbau ein, was einerseits dafür sorgt, dass sich die endgültige Formgebung zuverlässig einstellt, die Kanten der endgültigen Formgebung vergleichsweise scharfkantig ausgebildet werden können, ohne die Gefahr fürchten zu müssen, dass die beim Vorformen erzeugten Krümmungen durch Fehlplatzierungen und/oder übermäßige Beanspruchung den Folienschichtaufbau irreversibel beschädigen.

Noch bevorzugter beträgt der Radius aller Vorkanten der vorformgebenden Oberfläche mehr als das Doppelte, meist bevorzugt mehr als das Fünffache des größten Radius der Kanten der formgebenden Oberfläche.

Gemäß einer bevorzugten Ausgestaltung weist auch die vorformgebende Oberfläche eine oder mehrere dreidimensionale Konturen als Erhebung und/oder Vertiefung auf, die aus ebenen, gewinkelt zueinanderstehenden, in geradlinigen Vorkanten aneinandergrenzenden Flächen gebildet ist, also insgesamt betrachtet die Oberflächenkontur eines oder mehrerer geschliffener Diamanten imitiert.

Bevorzugt sind die Vorkanten so ausgebildet, beispielsweise deren Radius so gewählt, dass nach dem Vorformen des Folienschichtaufbaus an der der jeweiligen Vorkante entsprechender Stelle eine Krümmung der ersten Hauptfläche des Folienschichtaufbaus mit einem Radius bewirkt wird, der mindestens einer Dicker, bevorzugt mindestens dem Doppelten der Dicke des Folienschichtaufbaus entspricht.

Dieser vergleichsweise große Radius ermöglicht später ein relativ einfaches und schnelles Positionieren des vorgeformten Folienschichtaufbaus in dem formgebenden, beim nachträglichen Hinterspritzen verwendeten Werkzeug.

Das Hinterspritzen erfolgt bevorzugt unter bezogen auf die Stapelrichtung der Schichten des Schichtaufbaus seitlich, um optisch unattraktive Dichteschwankungen in der Thermoplastschicht zu vermeiden. "Seitlich" dabei meint eine Zufuhrrichtung, die mit der Stapelrichtung einen rechten Winkel oder einen vom rechten Winkel um maximal 20° abweichenden Winkel einschließt.

Die Thermoplastschicht bildet bevorzugt eine ebene oder strukturierte, beschichtete oder unbeschichtete, äußere, noch bevorzugter freiliegende, dritte Hauptfläche des die Kunststoffverbundblende definierenden Schichtaufbaus aus. Bevorzugt und alternativ weist dabei die dritte Hauptfläche ebenfalls eine oder mehrere dreidimensionale Konturen auf, die jeweils aus ebenen, gewinkelt zueinanderstehenden, in geradlinigen Kanten aneinandergrenzenden, Flächen gebildet ist.

Das Hinterspritzen des Folienschichtaufbaus kann mehrstufig erfolgen unter Verwendung eines weiteren formgebenden Werkzeugs. Beispielsweise wird nach dem Hinterspritzen des Folienschichtaufbaus mit einem ersten Thermoplast in einer ersten Stufe und nach dessen Erstarren der erhaltene Formling in ein weiteres formgebendes Werkzeug unter Ausbildung einer zwischen der äußeren Fläche der ersten Thermoplastschicht und dem weiteren formgebenden Werkzeug ausgebildeten weiteren Cavität verbracht. In einer zweiten Stufe wird ein zweiter Thermoplast in die weitere Cavität eingebracht, um eine zweite Thermoplastschicht auszubilden, wobei erste Thermoplastschicht und zweite Thermoplastschicht stoffschlüssig verbunden sind und eine gemeinsame innere Grenzfläche ausbilden.

Bevorzugt ist der Klebstoff ein wärmehärtender Klebstoff und die Temperatur des Klebstoffs wird beim Vorformen, beispielsweise durch die Wahl der Temperatur des Werkzeugs, beispielsweise mehr als 280° C so eingestellt, dass eine Verfestigung bzw. Härten des Klebstoffs erreicht wird. Als eine Verfestigung wird beispielsweise chemisches und/oder physikalisches Härten des Klebstoffs, wie eine zunehmende Vernetzung des Klebstoffs verstanden. Dies hat den Vorteil, dass ein zusätzlicher Schritt Härteschritt entfallen kann.

Gemäß einer bevorzugten Ausgestaltung des erfindungsgemäßen Verfahrens wird eine zusätzliche Kunststofffolie, bevorzugt aus einem transparenten Thermoplast, in dem formgebenden Werkzeug und daran angrenzend angeordnet, so dass die Cavität zwischen der zusätzlichen Kunststofffolie und dem Folienschichtaufbau ausgebildet ist und die zusätzliche Kunststofffolie eine äußere Kunststofffolie des Schichtaufbaus ist, um eine weitere optisch attraktive Oberfläche zu erzeugen. Bevorzugt weist dabei die an die zusätzliche Kunststofffolie angrenzende Oberfläche des formgebenden Werkzeugs ebenfalls eine oder mehrere dreidimensionale Konturen auf, die jeweils aus ebenen, gewinkelt zueinander stehenden, in geradlinigen Kanten aneinandergrenzenden Flächen gebildet ist.

In einer zur vorgenannten Vorgehensweise zusätzlichen Vorgehensweise wird nach dem Entformen der Schichtaufbau in einem Gießformschritt mit einem Gießharz, bevorzugt einem polyurethanhaltigen Gießharz beschichtet. Bevorzugt weist dabei die an die Gießharzschicht angrenzende Oberfläche des formgebenden Werkzeugs ebenfalls eine oder mehrere dreidimensionale Konturen auf, die jeweils aus ebenen, gewinkelt zueinanderstehenden, in geradlinigen Kanten aneinandergrenzenden Flächen gebildet ist. Bevorzugt ist vorgesehen, dass die Gießharzschicht aus einem Polyurethan haltigen Gießharz ausgebildet ist, wobei das Polyurethan bevorzugt ein aliphatisches Polyurethan oder ein thermoplastisches Polyurethan ist. Das Gießharz kann ferner weitere Füllstoffe oder Additive aufweisen, beispielsweise Additive zur Verbesserung der Beständigkeit des Gießharzes gegenüber UV-Bestrahlung.

Die Gießharzschicht kann dabei über den Verlauf eine variierende Dicke aufweisen oder aber eine annähernd gleichmäßige Dicke aufweisen. Beispielsweise beträgt die Maximaldicke der Gießharzschicht nicht mehr als 1/10 der maximalen Gesamtdicke des Schichtaufbaus der Kunststoffverbundblende in Stapelrichtung der Schichten. Beispielsweise beträgt die mittlere Dicke der Gießharzschicht 0,2 bis 3 mm. Bevorzugt beträgt die Maximaldicke der Gießharzschicht weniger als 1mm, bevorzugt weniger als 0,7 mm. Durch die im Vergleich zur Gesamtdicke des Schichtaufbaus der Kunststoffverbundblende nur geringe Dicke der Gießharzschicht, können Spannungseffekte innerhalb der Blende vermieden werden. Es können weitere Schritte zur Mikrobeschichtung oder Bearbeitung der Oberfläche der Gießharzschicht vorgesehen sein. Beispielsweise können zusätzliche Mikrobeschichtungen zur Erhöhung der Kraftfestigkeit auf die Oberfläche der Gießharzschicht aufgebracht werden. Als Mikrobeschichtungen werden solche Beschichtungen verstanden, die eine Schichtdicke von einigen bis einigen Dekaden Mikrometer aufweisen.

Bevorzugt wird der Gießformschritt alternativ zum Schritt des Vorsehens der zusätzlichen Kunststofffolie gewählt, so dass die aus dem Gießharz ausgebildete Gießharzschicht angrenzend an die Thermoplastschicht angeordnet ist.

Bevorzugt sind mindestens die Kunststofffolien des Folienschichtaufbaus aus einem transparenten Kunststoff ausgebildet, ist ferner die Klebstoffschicht aus einem transparenten oder zumindest transparent aushärtenden Klebstoff ausgebildet und der Thermoplast transparent, um die in den Folienschichtaufbau eingebrachte Kontur bei Betrachtung durch die Thermoplastschicht hindurch sichtbar zu machen. Bevorzugt weisen wenigstens die Kunststofffolien, die Klebstoffschicht und die Thermoplastschicht einen optischen Brechungsindex auf, wobei diese Brechungsindizes um nicht mehr als 0,2, bevorzugt 0,1, voneinander abweichen.

Gemäß einer bevorzugten Variante weisen alle Schichten des Schichtaufbaus, bis auf eine optional vorgesehene metallische Beschichtung, einen Brechungsindex auf, der um nicht mehr als 0,2, bevorzugt 0,1 von dem der Thermoplastschicht abweicht. Bevorzugt Kunststofffolien, die Klebstoffschicht und die Thermoplastschicht die gleiche Farbe nach DIN 5033 auf, bzw. sind farblos oder unbunt. Dadurch kann eine optische "Tiefe" ähnlich dem eines Diamanten erzeugt werden.

Bevorzugt beträgt der minimale Entformungswinkel der formgebenden Oberfläche des formgebenden Werkzeugs mehr als 3° beispielsweise 8°.

Beispielsweise weist der Folienschichtaufbau drei Kunststofffolien und dazwischen liegende Klebstoffschichten auf, bevorzugt ist die Abfolge der Schichten des Folienschichtaufbaus wie folgt: transparente Lackschutzschicht; transparente Polycarbonatfolie mit einer Folienstärke von 125 µm; transparente Klebstoffschicht; einseitig metallisch, nicht-leitend transluzent (NCVM) beschichtete Polyethylenterephthalatfolie mit einer Folienstärke von 25 µm; transparente Klebstoffschicht; transparente Polycarbonatfolie mit einer Folienstärke von 125 µm; transparente Lackschutzschicht.

Bevorzugt weisen die Kanten der formgebenden Oberfläche einen Radius zur Formgebung der ersten Hauptfläche des Folienschichtaufbaus von weniger als 0,1 mm, bevorzugt von gleich 0,08 mm oder weniger, vor.

Gemäß einer bevorzugten Ausgestaltung des erfindungsgemäßen Verfahrens ist eine Maximalausdehnung des Folienschichtaufbaus um mindestens das 10-fache, bevorzugt mindestens das 20-fache, noch bevorzugter mindestens das 30-fache, größer als eine Minimalabmessung des Schichtaufbaus. Die Minimalabmessung bestimmt sich aus einem senkrecht zur Maximalausdehnung des Folienschichtaufbaus vorgenommenen Schnitt durch den Schichtaufbau der Kunststoffverbundblende, wobei die Minimalabmessung die minimalste Dicke dieses Schnitts ist.

Die Erfindung betrifft ferner eine Kunststoffverbundblende in einem Schichtaufbau. Der Schichtaufbau der Kunststoffverbundblende umfasst einen Folienschichtaufbau aus wenigstens zwei transparenten Kunststofffolien und wenigstens einer, zwischen jeweils zwei Kunststofffolien angeordneten und die zwei Kunststofffolien jeweils stoffschlüssig verbindenden transparenten Klebstoffschicht, wobei der Folienschichtaufbau zwei in Stapelrichtung seiner Schichten gegenüberliegende äußere Hauptflächen definiert, von denen eine erste eine äußere Hauptfläche, d.h. eine freiliegende Oberfläche definierende Hauptfläche ist, die von einer der äußeren Kunststofffolien des Folienschichtaufbaus oder sofern vorhanden deren Beschichtung definiert ist und wobei wenigstens eine der Kunststofffolien transluzent metallisch beschichtet ist, um eine dekorative, metallisch glänzende Lichteffektschicht bereitzustellen.

Beispielsweise ist eine Kunststofffolie des Folienschichtaufbaus durch Gasphasenabscheidung, wie chemische oder physikalische Gasphasenabscheidung oder Sputtern oder sogenanntes non conductive vacuum metallizing (NCVM) metallisch beschichtet. Beispielsweise ist die transluzent metallisch beschichtete Folie eine innere Folie des Folienschichtaufbaus und wirkt als Lichteffektschicht. Bevorzugt ist die metallisch transluzent beschichtete Folie elektrisch nichtleitend beschichtet, um bei späterer Anordnung der Kunststoffverbundblende vor einem kapazitiven oder induktiven Berühr- oder Annäherungsdetektionsmittel oder einer induktiven elektrischen Ladeinrichtung die elektromagnetische Feldausbreitung und damit die Detektion bzw. den Ladevorgang nicht zu stören.

Der Schichtaufbau umfasst ferner eine an die zweite Hauptflächen des Folienschichtaufbaus angrenzend, bevorzugt vollflächig angrenzend, angeordnete Thermoplastschicht aus einem transparenten Thermoplast. Bevorzugt sind die Thermoplastschicht und der Folienschichtaufbau stoffschlüssig, beispielsweise durch Hinterspritzen verbunden. Dabei ist erfindungsgemäß der Folienschichtaufbau so geformt, dass alle Oberflächen und Grenzflächen des Folienschichtaufbaus, d.h. alle Oberflächen bzw. Grenzflächen zwischen den Kunststofffolien, deren optionale Beschichtungen und der Klebstoffschicht bzw. Klebstoffschichten eine oder mehrere, dreidimensionale Konturen ausbilden, die aus ebenen, gewinkelt zueinander stehenden, in geradlinigen Kanten aneinandergrenzenden Flächen gebildet ist. Die Kontur weist beispielsweise eine in Richtung der Thermoplastschicht weisende oder eine in entgegengesetzte Richtung weisende Spitze auf. Die erfindungsgemäße Kunststoffverbundblende imitiert somit in optisch idealer Weise eine Oberflächenstruktur eines oder mehrerer polierten Diamanten. Dies wird auf die Verwendung eines mehrere Kunststofffolien und eine Klebstoffschicht beinhaltenden Folienschichtaufbaus zurückgeführt, welche die die Kontur beinhaltende Oberflächengestalt in perfekter Weise aufnimmt und dauerhaft beibehält. Dadurch lässt sich insbesondere der geradlinige und scharfkantige für einen polierten Diamanten typische Kantenverlauf in idealer Weise nachbilden, dies ist insbesondere von Vorteil, wenn die Kontur bei Betrachtung durch die Thermoplastschicht hindurch erkennbar sein soll.

Die Thermoplastschicht bildet bevorzugt eine ebene oder strukturierte, beschichtete oder unbeschichtete, äußere, noch bevorzugter freiliegende, dritte Hauptfläche des die Kunststoffverbundblende definierenden Schichtaufbaus aus. Bevorzugt weist die Oberfläche ebenfalls eine oder mehrere dreidimensionale Konturen auf, die jeweils aus ebenen, gewinkelt zueinanderstehenden, in geradlinigen Kanten aneinandergrenzenden Flächen gebildet ist

Der Begriff Kunststofffolie ist weit auszulegen, so dass eine zusätzliche Beschichtung nicht ausgeschlossen ist. Beispielsweise ist die Folie jeweils aus einem thermoplastischen Kunststoff, bevorzugt einem Polycarbonat oder einem Polymethylmethacrylat oder einem Polyethylenterephthalat ausgebildet. Jede der Folie ist optional beschichtet, beispielsweise durch Gasphasenabscheidung oder durch einen Rolle-zu-Rolle-Auftrag. Beispielsweise ist wenigstens eine Kunststofffolie metallisch beschichtet, antireflex-, kratzfest- oder die Abriebfestigkeit steigernd beschichtet. Die Gesamtdicke des Folienschichtaufbaus in Stapelrichtung seiner Schichten beträgt beispielsweise zwischen 0,125 mm bis 0,50 mm, bevorzugt 0,20 mm bis 0,30 mm.

Zur Verbesserung der optischen Attraktivität der äußeren Oberfläche der Kunststoffverbundblende auf der Seite der Kunststoffverbundblende, die dem Folienschichtaufbau gegenüberliegt, ist gemäß eine bevorzugten Ausführungsform der Kunststoffverbundblende eine zusätzliche Kunststofffolie auf der dem Folienschichtaufbau abgewandten Seite der Thermoplastschicht und/oder eine Gießharzschicht vorgesehen. Bevorzugt weist dabei die Oberfläche der Gießharzschicht ebenfalls eine oder mehrere dreidimensionale Konturen auf, die jeweils aus ebenen, gewinkelt zueinanderstehenden, in geradlinigen Kanten aneinandergrenzenden Flächen gebildet ist.

Bevorzugt ist vorgesehen, dass die Gießharzschicht aus einem Polyurethan haltigen Gießharz ausgebildet ist, wobei das Polyurethan bevorzugt ein aliphatisches Polyurethan oder ein thermoplastisches Polyurethan ist. Das Gießharz kann ferner weitere Füllstoffe oder Additive aufweisen, beispielsweise Additive zur Verbesserung der Beständigkeit des Gießharzes gegenüber UV-Bestrahlung. Bevorzugt ist die zusätzliche Kunststofffolie aus einem transparenten Thermoplast bzw. ist die Gießharzschicht aus einem zumindest transparent aushärtendem Gießharz ausgebildet.

Die Gießharzschicht kann dabei über den Verlauf eine variierende Dicke aufweisen oder aber eine annähernd gleichmäßige Dicke aufweisen. Beispielsweise beträgt die Maximaldicke der Gießharzschicht nicht mehr als 1/10 der maximalen Gesamtdicke des Schichtaufbaus der Kunststoffverbundblende in Stapelrichtung der Schichten. Beispielsweise beträgt die mittlere Dicke der Gießharzschicht 0,2 bis 3 mm. Bevorzugt beträgt die Maximaldicke der Gießharzschicht weniger als 1mm, bevorzugt weniger als 0,7 mm. Es können weitere Schritte zur Mikrobeschichtung oder Bearbeitung der Oberfläche der Gießharzschicht vorgesehen sein. Beispielsweise können zusätzliche Mikrobeschichtungen zur Erhöhung der Kraftfestigkeit auf die Oberfläche der Gießharzschicht aufgebracht werden. Als Mikrobeschichtungen werden solche Beschichtungen verstanden, die eine Schichtdicke von einigen bis einigen Dekaden Mikrometer aufweisen.

Bevorzugt weisen wenigstens die Kunststofffolien, die Klebstoffschicht und die Thermoplastschicht einen optischen Brechungsindex auf, wobei diese Brechungsindizes um nicht mehr als 0,2, bevorzugt 0,1, voneinander abweichen. Gemäß einer bevorzugten Variante weisen alle Schichten des Schichtaufbaus, bis auf eine optional vorgesehene metallische Beschichtung, einen Brechungsindex auf, der um nicht mehr als 0,2, bevorzugt 0, 1 von dem der Thermoplastschicht abweicht. Bevorzugt weisen die Kunststofffolien, die Klebstoffschicht und die Thermoplastschicht die gleiche Farbe nach DIN 5033 auf, bzw. sind farblos oder unbunt. Dadurch kann eine optische "Tiefe" ähnlich dem eines Diamanten erzeugt werden.

Beispielsweise weist der Folienschichtaufbau drei Kunststofffolien und dazwischen liegende Klebstoffschichten auf, bevorzugt ist die Abfolge der Schichten des Folienschichtaufbaus wie folgt: transparente Lackschutzschicht; transparente Polycarbonatfolie mit einer Folienstärke von 125 µm; transparente Klebstoffschicht; einseitig metallisch, nicht-leitend transluzent (NCVM) beschichtete Polyethylenterephthalatfolie mit einer Folienstärke von 25 µm; transparente Klebstoffschicht; transparente Polycarbonatfolie mit einer Folienstärke von 125 µm; transparente Lackschutzschicht.

Bevorzugt weist die die freiliegende erste Hauptfläche des Folienschichtaufbaus definierende äußere, erste Kunststofffolie des Folienschichtaufbaus zur Ausbildung der Kanten der wenigstens einen Kontur einen Radius von weniger als 0,1 mm bevorzugt von gleich 0,08 mm oder weniger vor. Es ergibt sich ferner an den weiteren Schichten des Folienschichtaufbaus ein entsprechend größerer Radius, beispielsweise entspricht der Radius der die zweite Hauptfläche des Folienschichtaufbaus definierenden Kunststofffolie, welche nächstbenachbart zur Thermoplastschicht angeordnet ist, zur Ausbildung der Kanten in etwa der Schichtdicke des Folienschichtaufbaus und beträgt beispielsweise nicht mehr als 0,25 mm. Bevorzugt ist eine Maximalausdehnung des Folienschichtaufbaus um mindestens das 10-fache, bevorzugt mindestens das 20-fache, noch bevorzugter mindestens das 30-fache, größer als eine Minimalabmessung des Schichtaufbaus. Die Minimalabmessung bestimmt sich aus einem senkrecht zur Maximalausdehnung des Folienschichtaufbaus vorgenommenen Schnitt durch den Schichtaufbau der Kunststoffverbundblende, wobei die Minimalabmessung die minimalste Dicke dieses Schnitts ist.

Die Erfindung betrifft ferner eine Anordnung aus der Kunststoffverbundblende in einer der zuvor beschriebenen Ausführungsformen und einem Leuchtmittel zur Hinterleuchtung oder Durchleuchtung der Kunststoffblende, wobei die erste Hauptfläche des Folienschichtaufbaus dem Leuchtmittel zugewandt ist. Die zweite Hauptfläche des Folienschichtaufbaus ist dem Betrachter zugewandt, wobei die dritte Hauptfläche, welche durch die Thermoplastschicht oder die zusätzliche Kunststofffolie oder die Gießharzschicht definiert ist, eine dem Betrachter zugewandte Oberfläche ausbildet.

Die Erfindung betrifft ferner die Verwendung der Kunststoffverbundblende in einer der zuvor beschriebenen Ausführungsformen in einem Kraftfahrzeug.

Die Erfindung wird anhand der nachfolgenden Figuren näher erläutert. Die Figuren sind dabei nur beispielhaft zu verstehen und stellen jeweils lediglich eine bevorzugte Ausführungsvariante dar.

### Die Figuren zeigen:

- Fig. 1a: eine schematische Schnittansicht eines Anordnungsschritt einer ersten Ausführungsform des erfindungsgemäßen Verfahrens zur Herstellung einer Kunststoffverbundblende;
- Fig. 1b: eine zu Fig 1a gehörige Detailvergrößerung;
- Fig. 2a: eine schematische Detailschnittansicht des in das formgebende Werkzeug angeordneten vorgeformten Folienschichtaufbaus 2;
- Fig. 2b: eine weitere schematische Detailschnittansicht des in das formgebende Werkzeug angeordneten vorgeformten Folienschichtaufbaus 2;
- Fig. 3: eine schematische Schnittansicht während des Hinterspritzschritts der ersten Ausführungsform des erfindungsgemäßen Verfahrens zur Herstellung der Kunststoffverbundblende;
- Fig. 4a: eine schematische Schnittansicht vor dem Entformungsschritt der ersten Ausführungsform des erfindungsgemäßen Verfahrens zur Herstellung der Kunststoffverbundblende;
- Fig. 4b: eine zu Fig 3a gehörige Detailvergrößerung;
- Fig. 5: eine perspektivische Aufsicht auf die gemäß der ersten Ausführungsform des erfindungsgemäßen Verfahrens hergestellten Kunststoffverbundblende 1;
- Fig. 6a: eine schematische Schnittansicht eines Anordnungsschritt einer zweiten Ausführungsform des erfindungsgemäßen Verfahrens zur Herstellung einer Kunststoffverbundblende;
- Fig. 6b: eine zu Fig 6a gehörige Detailvergrößerung;
- Fig. 7: eine schematische Schnittansicht während des Hinterspritzschritts der zweiten Ausführungsform des erfindungsgemäßen Verfahrens zur Herstellung der Kunststoffverbundblende;
- Fig. 8a: eine schematische Schnittansicht vor dem Entformungsschritt der zweiten Ausführungsform des erfindungsgemäßen Verfahrens zur Herstellung der Kunststoffverbundblende;
- Fig. 8b: eine zu Fig 8a gehörige Detailvergrößerung;
- Fig. 9: eine perspektivische Aufsicht auf die gemäß der zweiten Ausführungsform des erfindungsgemäßen Verfahrens hergestellten Kunststoffverbundblende 1.

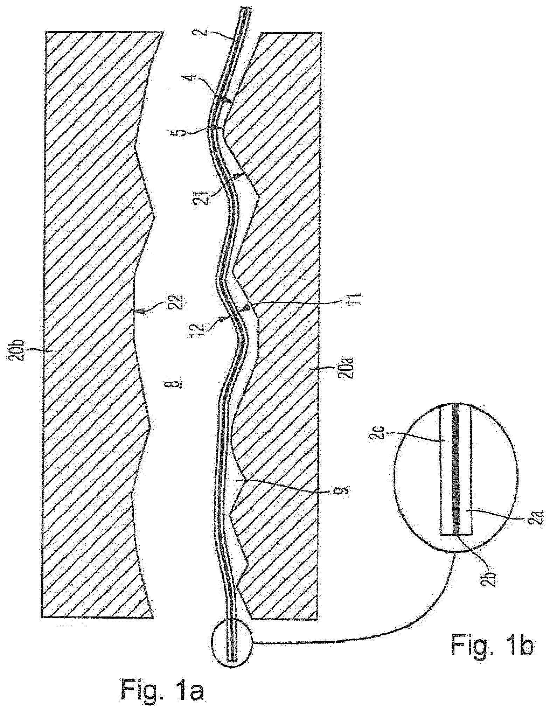

Figur 1a zeigt den Schritt des Anordnens einer ersten Ausführungsform des erfindungsgemäßen Verfahrens gemäß dem ersten Aspekt der Erfindung, bei dem ein vorgeformter Folienschichtaufbau 2 aus zwei Kunststofffolien 2a, 2c in einem formgebenden, aus zwei Werkzeughälften bestehenden Werkzeug 20a, 20b angeordnet wird. Der erfindungsgemäß vorgesehene Schritt des Vorformens des Folienschichtaufbaus 2 ist im Detail nicht dargestellt, sondern ergibt sich aus der Formgebung des vorgeformten Folienschichtaufbaus 2.

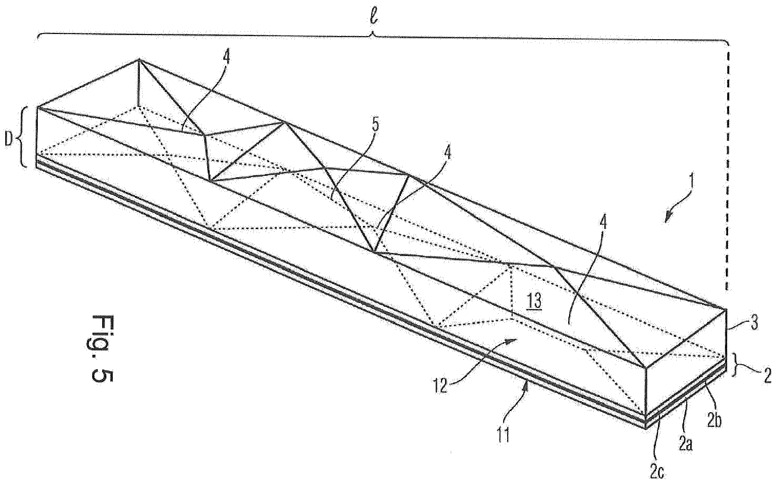

Figur 1a zeigt das Werkzeug 20a, 20b nur im Ausschnitt. Zwischen den zwei benachbarten transparenten Kunststofffolien 2a, 2c des Folienschichtaufbaus 2 ist, wie im Detail in der vergrößerten Darstellung in Figur 1b gezeigt ist, eine transparente Klebstoffschicht 2b vorgesehen, um die zwei Kunststofffolien 2a, 2c stoffschlüssig zu verbinden. Der Folienschichtaufbau 2 weist zwei sich in Stapelrichtung seiner aus Kunststofffolien 2a, 2c und einer Klebstoffschicht 2b gebildeten Schichten beabstandete Hauptflächen auf, eine erste Hauptfläche 11 und eine zweite Hauptfläche 12. Der Folienschichtaufbau 2 definiert die größte Ausdehnung, die Maximalausdehnung I, der gesamten Kunststoffverbundblende 1, wie später in Figur 5 gezeigt ist. Eine der beiden transparenten Kunststofffolien 2a oder 2c ist mit einer metallischen, transluzenten Beschichtung (Schichtdicke < 20µm) beschichtet, um eine metallisch glänzende Lichteffektschicht zu erzeugen, wobei ein semitransparenter (Transmission ca. 5% bis 25% im sichtbareren Bereich) Spiegeleffekt hervorgerufen wird. Die transparenten Kunststofffolien 2a und 2c weisen zusätzliche transparente oder transluzente Beschichtungen, wie eine Schutzlackbeschichtung auf. Die Beschichtungen sind in der Figur 1b aus Gründen der Maßstäblichkeit und der Vereinfachung nicht gezeigt. Der Klebstoff der Klebstoffschicht 2b ist wärmehärtend und ist ebenfalls transparent. Die Gesamtdicke des Folienschichtaufbaus 2 in Stapelrichtung seiner Schichten liegt beispielsweise zwischen 0,125 mm bis 0,50 mm. Beim Anordnen des vorgeformten Folienschichtaufbaus 2 in dem formgebenden Werkzeug 20a, 20b wird dieser so platziert, dass eine seiner zwei Hauptflächen, hier die erste Hauptfläche 11, einer spezifischen formgebenden Oberfläche 21 des formgebenden Werkzeugs 20a, 20b zugewandt ist und damit die zweite Hauptfläche 12 der formgebenden Oberfläche 21 abgewandt ist. Die spezifische formgebende Oberfläche 21 soll die endgültige Formgebung des Folienschichtaufbaus 2 vorgeben und ist dadurch charakterisiert, dass sie eine oder mehrere dreidimensionale Konturen 4 als Erhebung und/oder Vertiefung ausbildet, die aus ebenen, gewinkelt zueinander stehenden, in geradlinigen Kanten 5 aneinandergrenzenden Flächen gebildet ist, also die Oberflächenkontur eines geschliffenen Diamanten imitiert. Die Rauheit der formgebenden Oberfläche 21 ist VDI 3400 Ref 12 oder besser.

Bei dem Anordnen des Folienschichtaufbaus 2 in dem formgebenden Werkzeug 20a, 20b wird zwischen der der ersten Hauptfläche 11 abgewandten, zweiten Hauptfläche 12 und der Fläche 22 des formgebenden Werkzeug 20a, 20b eine Cavität 8 ausgebildet, wohingegen eine verbleibende Cavität 9 zwischen der ersten Hauptfläche 11 des Folienschichtaufbaus 2 und der formgebenden Oberfläche 21 im nachfolgenden Schritt reduziert werden soll. Die verbleibende Cavität 9 ergibt sich daraus, dass der Folienschichtaufbau 2 im Vorformschritt lediglich an die endgültige Formgebung angenähert vorgeformt wurde. Der Vorformschritt ist andererseits nötig, um beim nachfolgenden Hinterspritzen ein möglichst vollständiges Anliegen des Folienschichtaufbaus 2 an die formgebende Oberfläche 21 zu erreichen, so dass dieser seine, die Kontur 4 oder die Konturen nachbildende, endgültige Formgebung erhalten kann. Dabei handelt es sich um einen Warmumformungs- und/oder einen isostatischen Hochdruckumformungsschritt in einem vorformgebenden Werkzeug, welches eine vorformgebende Oberfläche aufweist. Der Vorformschritt ist dem in Figur 1a gezeigten Schritt vorgeschaltet. Dabei geht es darum, den Folienschichtaufbau 2 durch das Vorformen in eine Formgebung zu bringen, die nicht deckungsgleich mit der endgültigen, durch das formgebende Werkzeug 20a, 20b, insbesondere dessen formgebende Oberfläche 21 bestimmte Formgebung ist, aber ein leichteres Anordnen des Folienschichtaufbaus 2 im formgebenden Werkzeug 20a, 20b ermöglicht und das Erreichen der endgültigen Formgebung sicherstellt.

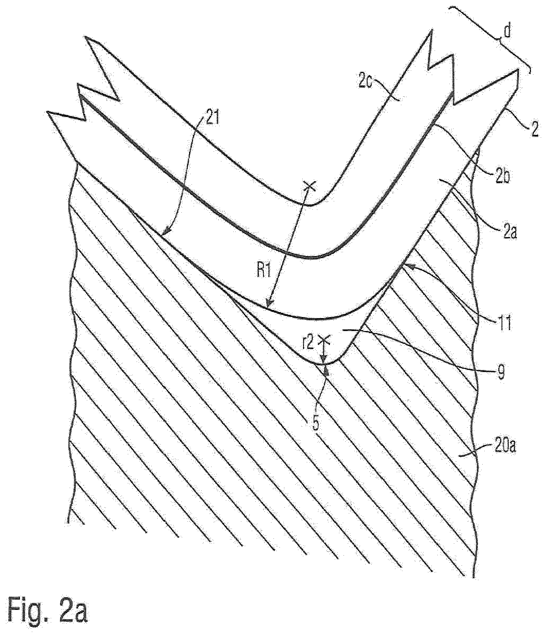

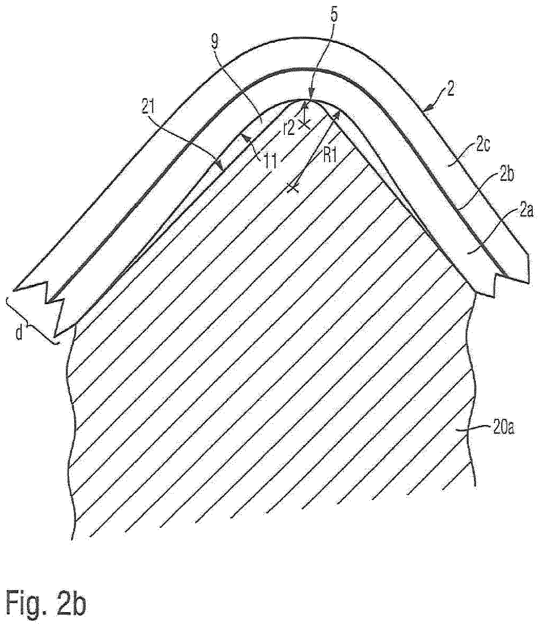

Eine exakte Übereinstimmung der vorgeformten Formgebung an die endgültige Formgebung ist aus mehreren Gründen nicht erwünscht, so wird dadurch nicht nur die positionsgenaue Anordnung im formgebenden Werkzeug 20a, 20b erschwert, sondern es besteht die Gefahr, dass die beim Vorformen ansonsten möglicherweise bereits in den Folienschichtaufbau eingebrachten Kanten nicht exakt deckungsgleich mit den Kanten im formgebenden Werkzeug 20a, 20b sind, was zu einer Beeinträchtigung der optischen Erscheinung des gesamten Schichtaufbaus führt. Aus diesem Grund wird zumindest auf eine Ausbildung von scharfen Kanten im Folienschichtaufbau 2 im Vergleich zu denen der endgültigen Formgebung verzichtet. Anders ausgedrückt, die Vorkanten der vorformgebenden Oberfläche sind gegenüber den Kanten 5 der formgebenden Oberfläche 21 verrundet. Wie die Figuren 2a und 2b an einer Senke bzw. Spitze der formgebenden Oberfläche 21 zeigen, weist der vorgeformte Folienschichtaufbau 2 einen durch das Vorformen mittels der Vorkante der vorformgebenden Oberfläche bewirkten Krümmungsradius R1 beziehungsweise R2 der ersten Hauptfläche 11 des Folienschichtaufbaus 2 auf, der an einer Stelle eingebracht ist, die einer Kante 5 der formgebenden Oberfläche 21 des formgebenden Werkzeugs 20a, 20b entspricht und dabei jeweils größer als die Dicke d des Folienschichtaufbaus 2 ist. Es ergibt sich daraus ferner, dass die zum Vorformen des Folienschichtaufbaus 2 verwendeten Vorkanten des vorformgebenden Werkzeugs einen größeren Radius aufweisen als die aufgrund der räumlichen Platzierung entsprechende Kante 5 in der formgebenden Oberfläche 21 des formgebenden Werkzeugs 201, 20b, welche einen Radius r1 bzw. r2 aufweist.

Die durch das Vorformen bewirkte dreidimensionale Vorformung zeichnet sich beispielsweise in einer einfachen Variante dadurch aus, dass lediglich die maximalen Höhen und maximalen Tiefen der vorgeformten Formgebung an den der endgültigen Formgebung entsprechenden Stellen ausgebildet werden. Bevorzugt weist aber auch die vorformgebende Oberfläche Kanten, hier als Vorkanten bezeichnet, auf, die den Folienschichtaufbau 2 so vorformen, dass dieser an den Stellen der Vorkanten eine Krümmung mit einem Radius aufweisen, der mindestens dem Doppelten der Dicke des Folienschichtaufbaus 2 entspricht. Die vorformgebende Oberfläche ist so ausgebildet, dass die an entsprechender Stelle der Kanten 5 der formgebenden Oberfläche 21 platzierten Vorkanten einen Radius aufweisen, der größer, bevorzugt ein Vielfaches größer als der Radius der entsprechenden Kante 5 der formgebenden Oberfläche 21 ist.

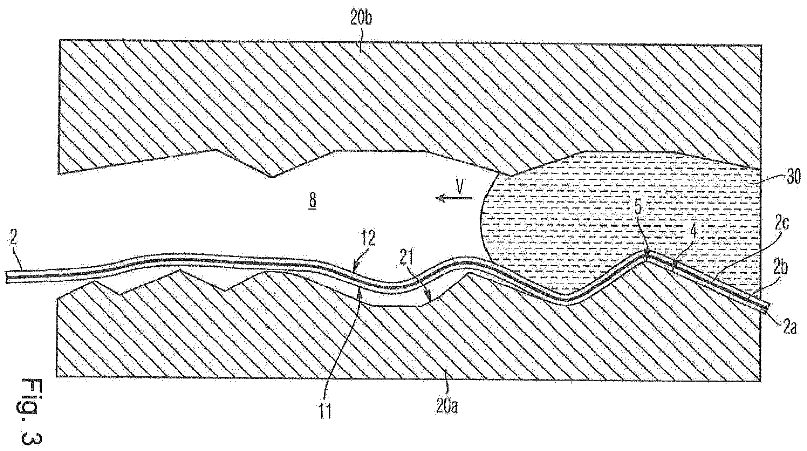

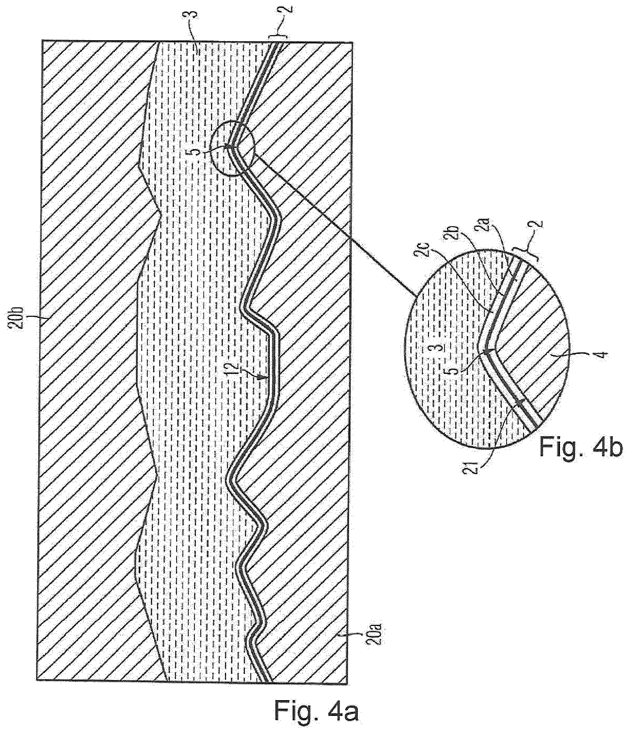

Im nachfolgenden Hinterspritzschritt der Figur 3 wird das Werkzeug 20a, 20b geschlossen und ein Thermoplast 30 seitlich entsprechend dem Richtungspfeil V in die Cavität 8 unter Druck eingespritzt. Dies sorgt dafür, dass der Folienschichtaufbau 2 sich an die formgebende Oberfläche 21 anlegt und dessen Profil also die dreidimensionalen Konturen 4 als Negativabdruck übernimmt. Der Druck des Thermoplasts sorgt für eine Anpassung und Prägung des Folienschichaufbaus 2 entsprechend dem Profil der formgebenden Oberfläche, während die Temperatur des Thermoplasts von beispielsweise ca. 300°C und die Temperatur des formgebenden Werkzeugs von ca. 60°C ein Härten des Klebstoffs der Klebstoffschicht 2b und damit eine Stabilisierung des ausgeformten Folienschichtaufbaus 2 bewirkt. Nach erfolgter Ausfüllung der Cavität 8 ist der in Figur 4a gezeigte Zustand erreicht. Mit dem Erstarren des Thermoplasts 30 ist die Thermoplastschicht 3 ausgebildet, die an die zweite Hauptfläche 12 des Folienschichtaufbaus 2 angrenzt. Nach dem Erstarren ist die Thermoplastschicht 3 stoffschlüssig mit dem Folienschichtaufbau 2 verbunden.

Wie Figur 4b zeigt, hat sich der Folienschichtaufbau an die Kanten 5 der Konturen 4 der formgebenden Oberfläche 21 angeschmiegt Der erhaltene Schichtaufbau aus dem Folienschichtaufbau 2 und der Thermoplastschicht 3 wird nach dem Erstarren des Thermoplasts und dem Aushärten, d.h. vollständigen Verfestigen des Klebstoffs der Klebstoffschicht 2b dem Werkzeug 20a, 20b entnommen, um die in Figur 5 in perspektivischer Aufsicht gezeigte, erfindungsgemäße Kunststoffverbundblende 1 zu erhalten.

Die erfindungsgemäße Kunststoffverbundblende 1 ist zur Verwendung in einem nicht dargestellten Kraftfahrzeug vorgesehen und beispielsweise in einem zum Fahrzeug gehörenden Armaturenbrett oder einer Mittelkonsole angeordnet und dient als optisch attraktive, hinterleuchtete Anzeigefläche einer Funktionsanzeige. Die Kunststoffverbundblende 1 ist länglich ausgebildet, somit weist der zur Kunststoffverbundblende 1 gehörige Folienschichtaufbau 2 bzw. dessen Kunststofffolien 2a, 2b eine Maximalabmessung I auf, die die Minimalabmessung D der Kunststoffverbundblende 1 um ein Vielfaches übersteigt. Die Minimalabmessung D ist durch die minimalste Dicke der Kunststoffverbundblende 1 definiert, was in Figur 4 nicht ganz maßstabsgetreu dargestellt ist. Ihre auf den Folienschichtaufbau 2 bezogene Maximalausdehnung ist mit I bezeichnet und beträgt mehr als 50cm, wie beispielsweise 1 m. Die minimalste Dicke D der Kunststoffverbundblende 1 in etwa in Stapelrichtung ihrer Schichten liegt im Bereich 1 bis 3 cm. Der Schichtaufbau weist eine Thermoplastschicht 3 auf, die bei bestimmungsgemäßer Montage eine dem Fahrzeuginsassen zugewandte äußere Oberfläche 13 definiert. Vom Fahrzeuginsassen aus gesehen, befindet sich unter der Thermoplastschicht 3 der Folienschichtaufbau 2, der durch einen thermischen Hinterspritzvorgang stoffschlüssig mit dem Folienschichtaufbau 2 verbunden ist. Der Folienschichtaufbau 2 weist wenigstens zwei Kunststofffolien 2a, 2c und wenigstens eine zwischen jeweils zwei Kunststofffolien 2a, 2c angeordnete und die zwei Kunststofffolien 2a, 2c stoffschlüssig verbindende Klebstoffschicht 2b , wobei der Folienschichtaufbau 2 zwei in Stapelrichtung seiner Schichten gegenüberliegende äußere Hauptflächen 11, 12 definiert, von denen eine erste eine äußere Hauptfläche, d.h. eine freiliegende Oberfläche definierende Hauptfläche 11 ist, die von der äußeren Kunststofffolien 2a des Folienschichtaufbaus 2 oder sofern vorhanden deren Beschichtung ausgebildet ist, wobei die vorgenannte Thermoplastschicht 3 an die zweite Hauptfläche 12 angrenzt. Dabei ist erfindungsgemäß der Folienschichtaufbau 2 so geformt, dass alle Oberflächen und Grenzflächen des Folienschichtaufbaus 2, d.h. alle Oberflächen bzw. Grenzflächen zwischen den Kunststofffolien 2a, 2c, deren optionale Beschichtungen und der Klebstoffschicht 2b eine oder mehrere, dreidimensionale Konturen 4 nahezu deckungsgleich ausbilden, die aus ebenen, gewinkelt zueinander stehenden, in geradlinigen Kanten 5 aneinandergrenzenden Flächen gebildet ist. Die Kontur 4 weist beispielsweise eine in Richtung der Thermoplastschicht 3 weisende oder eine in entgegengesetzte Richtung weisende Spitze auf. Die erfindungsgemäße Kunststoffverbundblende imitiert somit in optisch idealer Weise eine Oberflächenstruktur eines polierten Diamanten. Dies wird auf die Verwendung eines mehrere Kunststofffolien und wenigstens eine Klebstoffschicht beinhaltenden Folienschichtaufbaus 2 zurückgeführt, welche die die Kontur 4 beinhaltende Oberflächengestalt in perfekter Weise aufnimmt und dauerhaft beibehält. Dadurch lässt sich insbesondere der geradlinige und scharfkantige für einen polierten Diamanten typische Kantenverlauf in idealer Weise nachbilden, dies ist insbesondere von Vorteil, wenn die Kontur 4 bei Betrachtung durch die Thermoplastschicht 3 hindurch erkennbar wird.

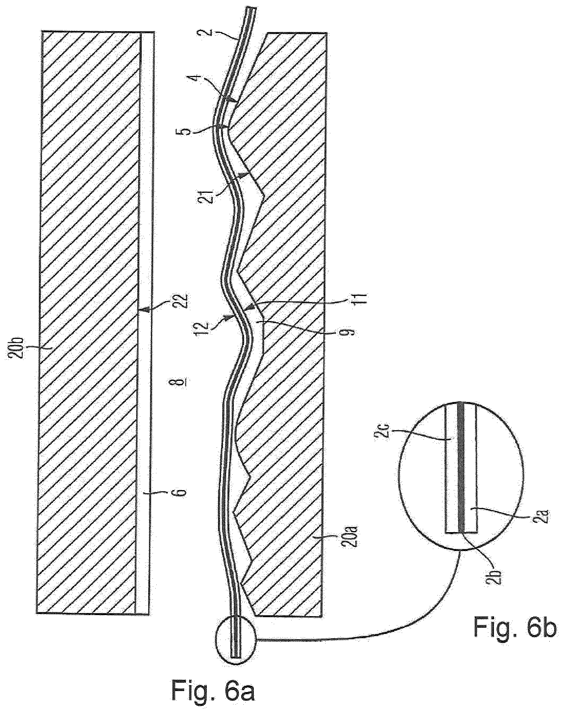

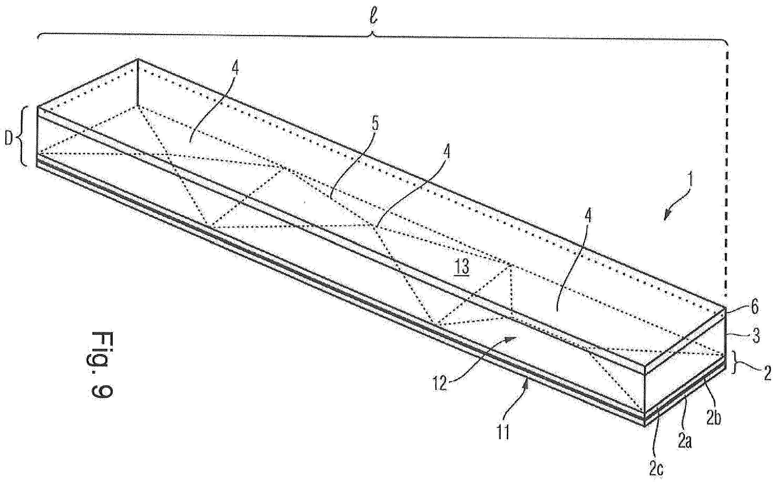

Figur 6a zeigt den Schritt des Anordnens einer zweiten Ausführungsform des erfindungsgemäßen Verfahrens, bei dem neben einem Folienschichtaufbau 2 aus zwei Kunststofffolien 2a, 2c eine zusätzliche Kunststofffolie 6 aus einem transparentem Thermoplast in einem formgebenden, aus zwei Werkzeughälften bestehenden Werkzeug 20a, 20b angeordnet wird. Figur 6a zeigt das Werkzeug 20a, 20b nur im Ausschnitt. Zwischen den zwei benachbarten Kunststofffolien 2a, 2c des Folienschichtaufbaus 2 ist, wie im Detail in der vergrößerten Darstellung in Figur 5b gezeigt ist, eine Klebstoffschicht 2b vorgesehen, um die zwei Kunststofffolien 2a, 2c stoffschlüssig zu verbinden. Der Folienschichtaufbau 2 weist zwei, sich in Stapelrichtung seiner aus Kunststofffolien 2a, 2c und einer Klebstoffschicht 2b gebildeten Schichten beabstandete Hauptflächen auf, eine erste Hauptfläche 11 und eine zweite Hauptfläche 12. Der Folienschichtaufbau 2 definiert die größte Ausdehnung, die Maximalausdehnung I, des Folienschichtaufbaus 2, wie später in Figur 9 gezeigt ist. Die transparenten Kunststofffolien 2a und 2c weisen zusätzliche transparente oder transluzente Beschichtungen, wie eine Schutzlackbeschichtung oder eine metallische, nichtleitende Beschichtung. Letztere ist vorgesehen, das optische Reflexionsverhalten der Folie zu beeinflussen. Die Beschichtungen sind in der Figur 5b aus Gründen der Maßstäblichkeit und der Vereinfachung nicht gezeigt. Der Klebstoff der Klebstoffschicht 2b ist wärmehärtend und ist ebenfalls transparent. Die Gesamtdicke des Folienschichtaufbaus 2 in Stapelrichtung seiner Schichten beträgt beispielsweise zwischen 0,125 mm bis 0,50 mm.

Bei dem Anordnen des Folienschichtaufbaus 2 in dem formgebenden Werkzeug 20a, 20b wird zwischen der der ersten Hauptfläche 11 abgewandten, zweiten Hauptfläche 12 und der Fläche 22 des formgebenden Werkzeug 20a, 20b eine Cavität 8 ausgebildet, wohingegen eine verbleibende Cavität 9 zwischen der ersten Hauptfläche 11 des Folienschichtaufbaus 2 und der formgebenden Oberfläche 21 im nachfolgenden Schritt reduziert werden soll. Die verbleibende Cavität 9 ergibt sich daraus, dass der Folienschichtaufbau 2 im Vorformschritt lediglich an die endgültige Formgebung angenähert vorgeformt wurde. Der Vorformschritt ist andererseits nötig, um beim nachfolgenden Hinterspritzen ein möglichst vollständiges Anliegen des Folienschichtaufbaus 2 an die formgebende Oberfläche 21 zu erreichen, so dass dieser seine, die Kontur 4 oder die Konturen nachbildende, endgültige Formgebung erhalten kann. Dabei handelt es sich um einen Warmumformungs- und/oder einen isostatischen Hochdruckumformungsschritt in einem vorformgebenden Werkzeug, welches eine vorformgebende Oberfläche aufweist. Der Vorformschritt ist dem in Figur 6a gezeigten Schritt vorgeschaltet. Dabei geht es darum, den Folienschichtaufbau 2 durch das Vorformen in eine Formgebung zu bringen, die nicht deckungsgleich mit der endgültigen, durch das formgebende Werkzeug 20a, 20b, insbesondere dessen formgebende Oberfläche 21 bestimmte Formgebung ist, aber ein leichteres Anordnen des Folienschichtaufbaus 2 im formgebenden Werkzeug 20a, 20b ermöglicht und das Erreichen der endgültigen Formgebung sicherstellt.

Eine exakte Übereinstimmung der vorgeformten Formgebung an die endgültige Formgebung ist aus mehreren Gründen nicht erwünscht, so wird dadurch nicht nur die positionsgenaue Anordnung im formgebenden Werkzeug 20a, 20b erschwert, sondern es besteht die Gefahr, dass die beim Vorformen ansonsten möglicherweise bereits in den Folienschichtaufbau eingebrachten Kanten nicht exakt deckungsgleich mit den Kanten im formgebenden Werkzeug 20a, 20b sind, was zu einer Beeinträchtigung der optischen Erscheinung des gesamten Schichtaufbaus führt. Aus diesem Grund wird zumindest auf eine Ausbildung von scharfen Kanten im Folienschichtaufbau 2 im Vergleich zu denen der endgültigen Formgebung verzichtet. Anders ausgedrückt, die Vorkanten der vorformgebenden Oberfläche sind gegenüber den Kanten 5 der formgebenden Oberfläche 21 verrundet.

Die durch das Vorformen bewirkte dreidimensionale Vorformung zeichnet sich beispielsweise in einer einfachen Variante dadurch aus, dass lediglich die maximalen Höhen und maximalen Tiefen der vorgeformten Formgebung an den der endgültigen Formgebung entsprechenden Stellen ausgebildet werden. Bevorzugt weist aber auch die vorformgebende Oberfläche Kanten, hier als Vorkanten bezeichnet, auf, die den Folienschichtaufbau 2 so vorformen, dass dieser an den Stellen der Vorkanten eine Krümmung mit einem Radius aufweisen, der mindestens dem Doppelten der Dicke des Folienschichtaufbaus 2 entspricht. Die vorformgebende Oberfläche ist so ausgebildet, dass die an entsprechender Stelle der Kanten 5 der formgebenden Oberfläche 21 platzierten Vorkanten einen Radius aufweisen, der größer, bevorzugt ein Vielfaches größer als der Radius der entsprechenden Kante 5 der formgebenden Oberfläche 21 ist.

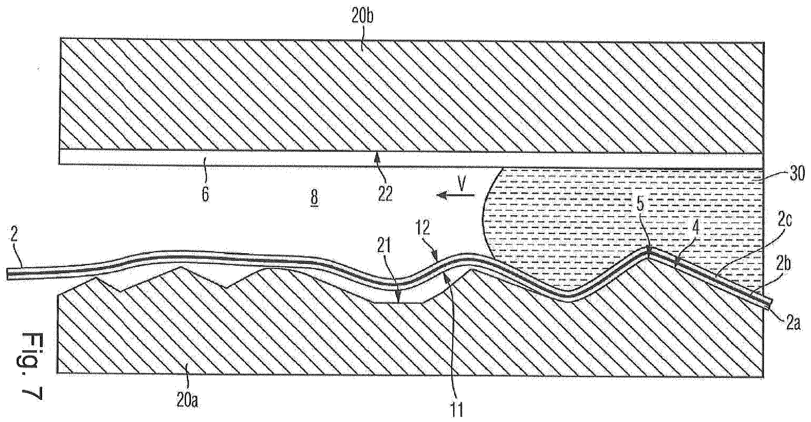

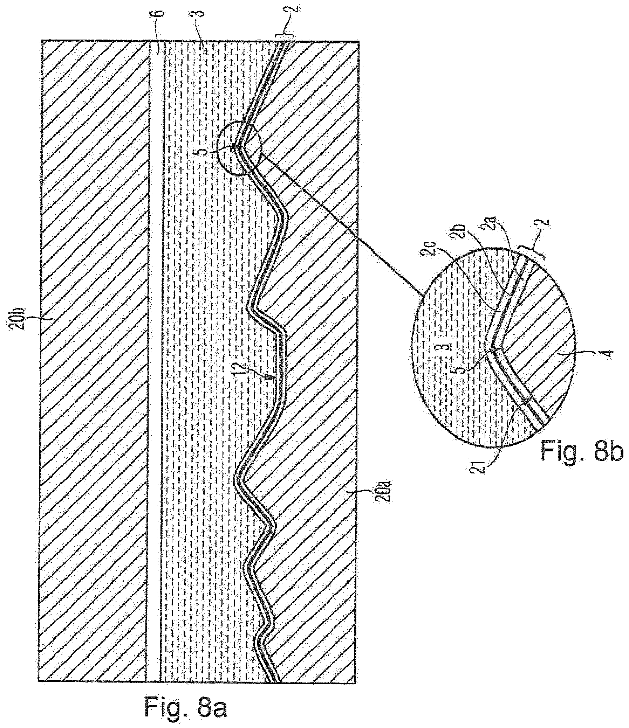

Im nachfolgenden Hinterspritzschritt der Figur 7 wird das Werkzeug 20a, 20b geschlossen und ein transparenter Thermoplast 30 seitlich entsprechend dem Richtungspfeil V in die Cavität 8 unter Druck eingespritzt. Dies sorgt dafür, dass der Folienschichtaufbau 2 sich an die formgebende Oberfläche 21 anlegt und dessen Profil also die dreidimensionalen Konturen 4 als Negativabdruck übernimmt. Der Druck des Thermoplasts sorgt für eine Anpassung und Prägung des Folienschichaufbaus 2 entsprechend dem Profil der formgebenden Oberfläche, während die Temperatur des Thermoplasts von beispielsweise ca. 300°C und die Temperatur des formgebenden Werkzeugs von ca. 60°C ein Härten des Klebstoffs der Klebstoffschicht 2b und damit eine Stabilisierung des ausgeformten Folienschichtaufbaus 2 bewirkt. Nach erfolgter Ausfüllung der Cavität 8 ist der in Figur 8a gezeigte Zustand erreicht. Mit dem Erstarren des Thermoplasts 30 ist die Thermoplastschicht 3 ausgebildet, die an die zweite Hauptfläche 12 des Folienschichtaufbaus 2 angrenzt. Nach dem Erstarren ist die Thermoplastschicht 3 stoffschlüssig mit dem Folienschichtaufbau 2 sowie mit der zusätzlichen Kunststofffolie 6 verbunden.

Wie Figur 8b zeigt, hat sich der Folienschichtaufbau 2 an die Kanten 5 der Konturen 4 der formgebenden Oberfläche 21 angeschmiegt. Der erhaltene Schichtaufbau aus dem Folienschichtaufbau 2 und der Thermoplastschicht 3 wird nach dem Erstarren des Thermoplasts und dem Aushärten, d.h. vollständigen Verfestigen des Klebstoffs der Klebstoffschicht 2b dem Werkzeug 20a, 20b entnommen, um die in Figur 9 in perspektivischer Aufsicht gezeigte erfindungsgemäße Kunststoffverbundblende 1 zu erhalten.

Die erfindungsgemäße Kunststoffverbundblende 1 ist zur Verwendung in einem nicht dargestellten Kraftfahrzeug vorgesehen und beispielsweise in einem zum Fahrzeug gehörenden Armaturenbrett oder einer Mittelkonsole angeordnet und dient als optisch attraktiven hinterleuchtete Anzeigefläche einer Funktionsanzeige. Die Kunststoffverbundblende 1 ist länglich ausgebildet, somit weist der zur Kunststoffverbundblende 1 gehörige Folienschichtaufbau 2 bzw. deren Kunststofffolien 2a, 2b eine Maximalabmessung I auf, die die Minimalabmessung D der Kunststoffverbundblende 1 um ein Vielfaches übersteigt. Die Minimalabmessung D ist durch die minimalste Dicke der Kunststoffverbundblende 1 in Stapelrichtung der Schichten bzw. Folien der Kunststoffverbundblende 1 definiert, was in Figur 4 nicht ganz maßstabsgetreu dargestellt ist. Ihre auf den Folienschichtaufbau 2 bezogene Maximalausdehnung ist mit I bezeichnet und beträgt mehr als 50cm, wie beispielsweise 1 m. Die minimalste Dicke D der Kunststoffverbundblende 1 in Stapelrichtung ihrer Schichten liegt im Bereich 1 bis 3 cm. Der Schichtaufbau weist eine zusätzliche transparente Kunststofffolie 6 und eine darunter angeordnete, mit der Kunststofffolie 6 stoffschlüssig verbundene Thermoplastschicht 3 auf. Die zusätzliche Kunststofffolie definiert bei bestimmungsgemäßer Montage eine dem Fahrzeuginsassen zugewandte äußere Oberfläche 13. Vom Fahrzeuginsassen aus gesehen, befindet sich unter der Thermoplastschicht 3 der Folienschichtaufbau 2, der durch einen thermischen Hinterspritzvorgang stoffschlüssig mit dem Folienschichtaufbau 2 verbunden ist. Der Folienschichtaufbau 2 weist wenigstens zwei Kunststofffolien 2a, 2c und wenigstens eine zwischen jeweils zwei Kunststofffolien 2a, 2c angeordnete und die zwei Kunststofffolien 2a, 2c stoffschlüssig verbindende Klebstoffschicht 2b, wobei der Folienschichtaufbau 2 zwei in Stapelrichtung seiner Schichten gegenüberliegende, äußere Hauptflächen 11, 12 definiert, von denen eine erste eine äußere Hauptfläche, d.h. eine freiliegende Oberfläche definierende Hauptfläche 11 ist, die von der äußeren Kunststofffolien 2a des Folienschichtaufbaus 2 oder sofern vorhanden deren Beschichtung ausgebildet ist, wobei die vorgenannte Thermoplastschicht 3 and die zweite Hauptfläche 12 angrenzt. Dabei ist erfindungsgemäß der Folienschichtaufbau 2 so geformt, dass alle Oberflächen und Grenzflächen des Folienschichtaufbaus 2, d.h. alle Oberflächen bzw. Grenzflächen zwischen den Kunststofffolien 2a, 2c, deren optionale Beschichtungen und der Klebstoffschicht 2b eine oder mehrere, dreidimensionale Konturen 4 nahezu deckungsgleich ausbilden, die aus ebenen, gewinkelt zueinander stehenden, in geradlinigen Kanten 5 aneinandergrenzenden Flächen gebildet ist. Die Kontur 4 weist beispielsweise eine in Richtung der Thermoplastschicht 3 weisende oder eine in entgegengesetzte Richtung weisende Spitze auf. Die erfindungsgemäße Kunststoffverbundblende imitiert somit in optisch idealer Weise eine Oberflächenstruktur eines polierten Diamanten. Dies wird auf die Verwendung eines mehrere Kunststofffolien und wenigstens eine Klebstoffschicht beinhaltenden Folienschichtaufbaus 2 zurückgeführt, welche die die Kontur 4 beinhaltende Oberflächengestalt in perfekter Weise aufnimmt und dauerhaft beibehält. Dadurch lässt sich insbesondere der geradlinige und scharfkantige für einen polierten Diamanten typische Kantenverlauf in idealer Weise nachbilden, dies ist insbesondere von Vorteil, wenn die Kontur 4 bei Betrachtung durch die zusätzliche Kunststofffolie 6 und die Thermoplastschicht 3 hindurch erkennbar wird.

## Patentansprüche

1. Verfahren zur Herstellung einer einen Schichtaufbau aufweisenden Kunststoffverbundblende (1), insbesondere für ein Kraftfahrzeug:
Bereitstellen eines Folienschichtaufbaus (2), aufweisend wenigstens zwei transparente Kunststofffolien (2a, 2c), und wenigstens eine zwischen jeweils zwei benachbarten Kunststofffolien (2a, 2c) angeordneten und die zwei Kunststofffolien (2a, 2b) jeweils verbindenden Klebstoffschicht (2b) aus einem nicht vollständig verfestigten, zumindest im verfestigten Zustand transparenten Klebstoff;
Vorformen des Folienschichtaufbaus (2) so, dass dieser eine lediglich an eine endgültige Formgebung angenäherte Formgebung aufweist;
Anordnen des vorgeformten Folienschichtaufbaus (2) in einem formgebenden Werkzeug (20a, 20b), so dass der Folienschichtaufbau (2) mit einer ersten Hauptfläche (11) einer formgebenden Oberfläche (21) des formgebenden Werkzeugs (20a, 20b) zugewandt angeordnet ist und dass zwischen einer der ersten Hauptfläche (11) abgewandten, zweiten Hauptfläche (12) des Folienschichtaufbaus (2) und dem formgebenden Werkzeug (20a, 20b) eine Cavität (8) ausgebildet ist;
nachfolgendes Hinterspritzen des Folienschichtaufbaus (2) in einem thermisch formgebenden Verfahrensschritt unter Einbringen eines zumindest im erstarrten Zustand transparenten Thermoplasts (30) in die Cavität (8), um den Schichtaufbau als Formling zu erzeugen, wobei eine angrenzende Anordnung der ersten Hauptfläche (11) des Folienschichtaufbaus (2) an die formgebende Oberfläche (21) des formgebenden Werkzeugs (20a, 20b) und eine die Kontur (4) oder die Konturen nachbildende, endgültige Formgebung des Folienschichtaufbaus (2) erreicht wird, so dass der Schichtaufbau wenigstens eine erste, äußere, zum Folienschichtaufbau (2) gehörige Kunststofffolie (2a), eine zweite, zum Folienschichtaufbau (2) gehörige und innere Kunststofffolie (2c) eine zwischen erster Kunststofffolie (2a) und zweiter Kunststofffolie (2c) sich erstreckende Klebstoffschicht (2b) und eine an die zweite Hauptfläche (12) des Folienschichtaufbaus (2) angrenzende, durch den Thermoplast (30) ausgebildete Thermoplastschicht (3) aufweist;
Verfestigen der wenigstens einen Klebstoffschicht (2b) während des Vorformens und/oder Hinterspritzens, so dass der Folienschichtaufbau (2) entsprechend der formgebenden Oberfläche (21) stabilisiert ist;
Erstarren der Thermoplastschicht; und
Entformen des Schichtaufbaus;
**dadurch gekennzeichnet, dass**
eine der Kunststofffolien des Folienschichtaufbaus (2) metallisch transluzent beschichtet ist, und dass die formgebende Oberfläche (21) des formgebenden Werkzeugs (20a, 20b) eine oder mehrere, dreidimensionale Konturen (4) ausbildet, die aus ebenen, gewinkelt zueinander stehenden, in geradlinigen Kanten (5) aneinandergrenzenden Flächen gebildet ist.

2. Verfahren gemäß Anspruch 1, wobei der Klebstoff der Klebstoffschicht (2b) ein wärmehärtender Klebstoff ist und die Temperatur des Klebstoffs beim Hinterspritzen, beispielsweise durch die Wahl der Temperatur des Thermoplasts (30) und/oder durch die Wahl der Temperatur des formgebenden Werkzeugs (20a, 20b), so eingestellt ist, dass eine Verfestigung des Klebstoffs erreicht wird.

3. Verfahren gemäß einem der vorhergehenden Ansprüche, wobei eine zusätzliche Kunststofffolie (6) in dem formgebenden Werkzeug (20a, 20b) und angrenzend an das formgebende Werkzeug (20a, 20b) angeordnet wird, so dass die Cavität zwischen der zusätzlichen Kunststofffolie (6) und der zweiten Hauptfläche (12) des Folienschichtaufbaus (2) ausgebildet ist und die zusätzliche Kunststofffolie (6) eine äußere Kunststofffolie des erhaltenen Schichtaufbaus ist.

4. Verfahren gemäß einem der vorhergehenden Ansprüche, wobei nach dem Entformen der Schichtaufbau in einem Gießformschritt mit einem Gießharz, bevorzugt einem polyurethanhaltigen Gießharz beschichtet wird, wobei bevorzugt die aus dem Gießharz ausgebildete Gießharzschicht angrenzend an die Thermoplastschicht (3) angeordnet ist.

5. Verfahren gemäß einem der vorhergehenden Ansprüche, wobei die Kunststofffolien (2a, 2c) des bereitgestellten Folienschichtaufbaus (2) aus einem Thermoplast (30) ausgebildet sind.

6. Verfahren gemäß einem der vorhergehenden Ansprüche, wobei wenigstens eine der Kunststofffolien (2a, 2c) des bereitgestellten Folienschichtaufbaus (2) mit einem transparenten Lack beschichtet ist.

7. Verfahren gemäß einem der vorhergehenden Ansprüche, wobei die Kanten (5) der formgebenden Oberfläche (21) einen Radius zur endgültigen Formgebung der ersten Hauptfläche (1) des Folienschichtaufbaus (2a) von weniger als 0,1 mm bevorzugt von gleich 0,08 mm oder weniger aufweisen.

8. Verfahren gemäß einem der vorhergehenden Ansprüche, wobei das Vorformen ein thermisches Umformen und/oder ein isostatisches Hochdruckumformen des Folienschichtaufbaus (2) ist.

9. Verfahren gemäß einem der vorhergehenden Ansprüche, wobei das Vorformen in einem vorformgebenden Werkzeug mit einer vorformgebenden Oberfläche durchgeführt wird, wobei diese, sofern nicht kantenfrei, nur solche an entsprechender Stelle der Kanten (5) der formgebenden Oberfläche (21) platzierten Vorkanten aufweist, die jeweils einen Radius aufweisen, der größer, bevorzugt ein Vielfaches größer als der Radius (r1, r2) der entsprechenden Kante (5) der formgebenden Oberfläche (21) ist.

10. Verfahren gemäß dem vorhergehenden Anspruch, wobei die Vorkanten so ausgebildet sind, dass nach dem Vorformen des Folienschichtaufbaus (2) an der der jeweiligen Kante (5) entsprechender Stelle eine Krümmung der ersten Hauptfläche (11) des Folienschichtaufbaus (2) mit einem Radius (R1, R2) bewirkt wird, der mindestens einer Dicke (d) des Folienschichtaufbaus (2), bevorzugt mindestens dem Doppelten der Dicke (d) des Folienschichtaufbaus (2), entspricht.

11. Verfahren gemäß einem der vorhergehenden Ansprüche, wobei eine Maximalausdehnung (I) des Folienschichtaufbaus (2) um mindestens das 10-fache, bevorzugt mindestens das 20-fache, noch bevorzugter mindestens das 30-fache, größer als eine Minimalabmessung (D) des Schichtaufbaus ist.

12. Kunststoffverbundblende (1) in einem Schichtaufbau, aufweisend
wenigstens einen Folienschichtaufbau (2) aus wenigstens zwei transparenten Kunststofffolien (2a, 2c) und wenigstens einer zwischen jeweils zwei Kunststofffolien (2a, 2c) angeordneten und die zwei Kunststofffolien (2a, 2c) jeweils stoffschlüssig verbindenden, transparenten Klebstoffschicht (2b), wobei der Folienschichtaufbau (2) zwei in Stapelrichtung seiner Schichten gegenüberliegende äußere Hauptflächen (11, 12) definiert, wobei eine erste Hauptfläche (11) eine freiliegende Hauptfläche ist;
eine an die zweite Hauptflächen (12) des Folienschichtaufbaus (2) angrenzend angeordnete, bevorzugt stoffschlüssig mit dem Folienschichtaufbau (2) verbundene Thermoplastschicht (3) aus einem transparenten Thermoplast;
**dadurch gekennzeichnet,**
**dass** wenigstens eine der Kunststofffolien (2a, 2c) transluzent metallisch beschichtet ist und dass der Folienschichtaufbau (2) so geformt ist, dass dessen Schichten eine oder mehrere, dreidimensionale Konturen (4) ausbilden, die aus ebenen, gewinkelt zueinanderstehenden, in geradlinigen Kanten (5) aneinandergrenzenden Flächen gebildet ist.

13. Kunststoffverbundblende (1) gemäß dem vorhergehenden Anspruch, wobei im Bereich der die Kontur (5) jeweils ausbildenden Kanten (5) der Folienschichtaufbau (2) einen Radius von weniger als 0,1 mm bevorzugt von gleich 0,08 mm oder weniger aufweist.

14. Kunststoffverbundblende (1) gemäß einem der vorhergehenden Ansprüche 12 oder 13, wobei eine Maximalausdehnung (I) des Folienschichtaufbaus (2) um mindestens das 10-fache, bevorzugt mindestens das 20-fache, noch bevorzugter mindestens das 30-fache, größer als eine Minimalabmessung (D) des Schichtaufbaus ist

15. Anordnung (10) aus der Kunststoffverbundblende (1) gemäß einem der vorhergehenden Ansprüche 12 bis 14 und einem Leuchtmittel zur Hinterleuchtung oder Durchleuchtung der Kunststoffverbundblende (1), wobei die erste Hauptfläche (11) des Folienschichtaufbaus (2) dem Leuchtmittel zugewandt ist.

16. Verwendung der Kunststoffverbundblende (1) gemäß einem der vorhergehenden Ansprüche 10 bis 14 in einem Kraftfahrzeug.

## Claims

1. Method for producing a plastics composite panel (1) comprising a layer construction, more particularly for a motor vehicle:
providing of a film layer construction (2), comprising at least two transparent plastics films (2a, 2c), and at least one adhesive layer (2b) which is arranged between pairs of adjacent plastics films (2a, 2c), which joins the two plastics films (2a, 2b) in each case and which is composed of a not completely solidified adhesive which is transparent at least in the solidified state;
preforming of the film layer construction (2) such that it comprises a shaping only approximate to an ultimate shaping;
arranging of the preformed film layer construction (2) in a shaping tool (20a, 20b), so that the film layer construction (2) is arranged with a first main face (11) facing a shaping surface (21) of the shaping tool (20a, 20b) and that a cavity (8) is formed between the shaping tool (20a, 20b) and a second main face (12) of the film layer construction (2) that faces away from the first main face (11);
subsequent in-mould coating of the film layer construction (2) in a thermally shaping method step with introduction into the cavity (8) of a thermoplastic (30) which is transparent at least in the consolidated state, so as to generate the layer construction as a moulding, where an arrangement of the first main face (11) of the film layer construction (2) bordering the shaping surface (21) of the shaping tool (20a, 20b) and an ultimate shaping of the film layer construction (2) that models the contour (4) or the contours are achieved, so that the layer construction comprises at least a first, outer plastics film (2a) belonging to the film layer construction (2), a second, inner plastics film (2c) belonging to the film layer construction (2), an adhesive layer (2b) extending between first plastics film (2a) and second plastics film (2c), and a thermoplastic layer (3) formed by the thermoplastic (30) and bordering the second main face (12) of the film layer construction (2);
solidifying of the at least one adhesive layer (2b) during the preforming and/or in-mould coating, so that the film layer construction (2) is stabilized in accordance with the shaping surface (21);
setting of the thermoplastic layer; and
demoulding of the layer construction;
**characterized in that**
where one of the plastics films of the film layer construction (2) has metallically translucent coating, and **in that** the shaping surface (21) of the shaping tool (20a, 20b) forms one or more three-dimensional contours (4) formed of planar faces which are angled relative to one another and which border one another in rectilinear edges (5).

2. Method according to Claim 1, where the adhesive of the adhesive layer (2b) is a thermosetting adhesive and the temperature of the adhesive is adjusted during the in-mould coating, for example through the choice of the temperature of the thermoplastic (30) and/or through the choice of the temperature of the shaping tool (20a, 20b), such that solidification of the adhesive is achieved.

3. Method according to either of the preceding claims, where an additional plastics film (6) is arranged in the shaping tool (20a, 20b) and bordering the shaping tool (20a, 20b) so that the cavity is formed between the additional plastics film (6) and the second main face (12) of the film layer construction (2) and the additional plastics film (6) is an outer plastics film of the resulting layer construction.

4. Method according to any of the preceding claims, where after the demoulding of the layer construction, coating takes place in a casting step with a casting resin, preferably a polyurethane-containing casting resin, where preferably the casting resin layer formed from the casting resin is arranged bordering the thermoplastic layer (3),

5. Method according to any of the preceding claims, where the plastics films (2a, 2c) of the film layer construction (2) provided are formed of a thermoplastic (30).

6. Method according to any of the preceding claims, where at least one of the plastics films (2a, 2c) of the film layer construction (2) provided is coated with a transparent varnish.

7. Method according to any of the preceding claims, where the edges (5) of the shaping surface (21) have a radius for the ultimate shaping of the first main face (1) of the film layer construction (2a) of less than 0.1 mm, preferably of 0.08 mm or less.

8. Method according to any of the preceding claims, where the preforming is a thermal forming and/or an isostatic high-pressure forming of the film layer construction (2).

9. Method according to any of the preceding claims, where the preforming is carried out in a preliminary shaping tool having a preliminary shaping surface, where this surface, if it is not edge-free, only comprises fore-edges, sited at a corresponding place on the edges (5) of the shaping surface (21), which each have a radius which is larger, preferably larger by a multiple, than the radius (r1, r2) of the corresponding edge (5) of the shaping surface (21).

10. Method according to the preceding claim, where the fore-edges are formed in such a way that after the preforming of the film layer construction (2), at the position corresponding to the respective edge (5), a curvature of the first main face (11) of the film layer construction (2) is brought about with a radius (R1, R2) which corresponds at least to a thickness (d) of the film layer construction (2), preferably to at least twice the thickness (d) of the film layer construction (2).

11. Method according to any of the preceding claims, where a maximum extent (I) of the film layer construction (2) is at least ten times greater, preferably at least 20 times greater, more preferably at least 30 times greater than a minimum dimension (D) of the layer construction.

12. Plastics composite panel (1) in a layer construction, comprising
at least one film layer construction (2) composed of at least two transparent plastics films (2a, 2c) and at least one transparent adhesive layer (2b) arranged between pairs of plastics films (2a, 2c) and cohesively joining the two plastics films (2a, 2c) in each case, where the film layer construction (2) defines two outer main faces (11, 12) which lie opposite in the stacking direction of the layers of the film layer construction (2), where a first main face (11) is an exposed main face;
a thermoplastic layer (3) composed of a transparent thermoplastic, which is arranged bordering the second main faces (12) of the film layer construction (2) and is preferably connected cohesively to the film layer construction (2);
**characterized**
**in that** at least one of the plastics films (2a, 2c) has translucently metallic coating and in that the film layer construction (2) is shaped such that its layers form one or more three-dimensional contours (4) formed of planar faces which are angled relative to one another and which border one another in rectilinear edges (5).

13. Plastics composites panel (1) according to the preceding claim, where the film layer construction (2), in the region of the edges (5) forming the contour (5) in each case, has a radius of less than 0.1 mm, preferably of 0.08 mm or less.

14. Plastics composite panel (1) according to either of preceding Claims 12 and 13, where a maximum extent (I) of the film layer construction (2) is at least ten times, preferably at least 20 times, more preferably at least 30 times greater than a minimum dimension (D) of the layer construction.

15. Arrangement (10) composed of the plastics composite panel (1) according to any of the preceding Claims 12 to 14 and a lighting means for backlighting or through-lighting the plastics composite panel (1), where the first main face (11) of the film layer construction (2) is facing the lighting means.

16. Use of the plastics composite panel (1) according to any of preceding Claims 10 to 14 in a motor vehicle.

## Revendications

1. Procédé de fabrication d'un panneau composite en matière plastique (1) présentant une structure stratifiée, notamment pour un véhicule automobile :
la fourniture d'une structure stratifiée de feuilles (2), présentant au moins deux feuilles en matière plastique transparentes (2a, 2c), et au moins une couche d'adhésif (2b) agencée entre respectivement deux feuilles en matière plastique (2a, 2c) voisines et reliant respectivement les deux feuilles en matière plastique (2a, 2b), composée d'un adhésif non complètement solidifié, transparent au moins à l'état solidifié ;
le préformage de la structure stratifiée de feuilles (2) de telle sorte que celle-ci présente une forme se rapprochant uniquement d'une forme finale ;
l'agencement de la structure stratifiée de feuilles (2) préformée dans un outil de formage (20a, 20b), de telle sorte que la structure stratifiée de feuilles (2) est agencée avec une première surface principale (11) tournée vers une surface de formage (21) de l'outil de formage (20a, 20b) et qu'une cavité (8) est formée entre une deuxième surface principale (12) de la structure stratifiée de feuilles (2), détournée de la première surface principale (11), et l'outil de formage (20a, 20b) ;
le surmoulage par injection ultérieur de la structure stratifiée de feuilles (2) dans une étape de procédé de formage thermique avec introduction d'un thermoplastique (30) transparent au moins à l'état durci dans la cavité (8), afin de produire la structure stratifiée sous forme de corps moulé, un agencement adjacent de la première surface principale (11) de la structure stratifiée de feuilles (2) à la surface de formage (21) de l'outil de formage (20a, 20b) et un formage final de la structure stratifiée de feuilles, reproduisant le contour (4) ou les contours, étant obtenus, de telle sorte que la structure stratifiée présente au moins une première feuille en matière plastique extérieure (2a), appartenant à la structure stratifiée de feuilles (2), une deuxième feuille en matière plastique (2c) appartenant à la structure stratifiée de feuilles (2) et intérieure, une couche d'adhésif (2b) s'étendant entre la première feuille en matière plastique (2a) et la deuxième feuille en matière plastique (2c), et une couche de thermoplastique (3) adjacente à la deuxième surface principale (12) de la structure stratifiée de feuilles (2), formée par le thermoplastique (30) ;
la solidification de l'au moins une couche d'adhésif (2b) pendant le préformage et/ou le surmoulage par injection, de telle sorte que la structure stratifiée de feuilles (2) est stabilisée conformément à la surface de formage (21) ;
le durcissement de la couche de thermoplastique ; et
le démoulage de la structure stratifiée ;
**caractérisé en ce que**
l'une des feuilles en matière plastique de la structure stratifiée de feuilles (2) est munie d'un revêtement métallique translucide, et **en ce que** la surface de formage (21) de l'outil de formage (20a, 20b) forme un ou plusieurs contours tridimensionnels (4) qui sont formés par des surfaces planes, disposées en angle les unes par rapport aux autres, contiguës les unes aux autres par des bords rectilignes (5).

2. Procédé selon la revendication 1, dans lequel l'adhésif de la couche d'adhésif (2b) est un adhésif thermodurcissable et la température de l'adhésif lors du surmoulage par injection est ajustée, par exemple par le choix de la température du thermoplastique (30) et/ou par le choix de la température de l'outil de formage (20a, 20b), de telle sorte qu'une solidification de l'adhésif est obtenue.

3. Procédé selon l'une quelconque des revendications précédentes, dans lequel une feuille en matière plastique supplémentaire (6) est agencée dans l'outil de façonnage (20a, 20b) et de manière adjacente à l'outil de façonnage (20a, 20b), de telle sorte que la cavité est formée entre la feuille en matière plastique supplémentaire (6) et la deuxième surface principale (12) de la structure stratifiée de feuilles (2) et la feuille en matière plastique supplémentaire (6) est une feuille en matière plastique extérieure de la structure stratifiée obtenue.

4. Procédé selon l'une quelconque des revendications précédentes, dans lequel, après le démoulage, la structure stratifiée est revêtue d'une résine de coulée, de préférence d'une résine de coulée contenant du polyuréthane, dans une étape de coulée, la couche de résine de coulée formée à partir de la résine de coulée étant de préférence agencée de manière adjacente à la couche de thermoplastique (3).

5. Procédé selon l'une quelconque des revendications précédentes, dans lequel les feuilles en matière plastique (2a, 2c) de la structure stratifiée de feuilles (2) fournie sont formées d'un thermoplastique (30).

6. Procédé selon l'une quelconque des revendications précédentes, dans lequel au moins l'une des feuilles en matière plastique (2a, 2c) de la structure stratifiée de feuilles (2) fournie est revêtue d'un vernis transparent.

7. Procédé selon l'une quelconque des revendications précédentes, dans lequel les bords (5) de la surface de formage (21) présentent un rayon pour le formage final de la première surface principale (1) de la structure stratifiée de feuilles (2a) inférieur à 0,1 mm, de préférence égal à 0,08 mm ou moins.

8. Procédé selon l'une quelconque des revendications précédentes, dans lequel le préformage est un formage thermique et/ou un formage isostatique sous haute pression de la structure stratifiée de feuilles (2).

9. Procédé selon l'une quelconque des revendications précédentes, dans lequel le préformage est effectué dans un outil de préformage ayant une surface de préformage qui, si elle n'est pas exempte de bords, présente uniquement des pré-bords placés à l'emplacement correspondant des bords (5) de la surface de formage (21), qui présentent chacun un rayon qui est supérieur, de préférence un multiple du rayon (r1, r2) du bord correspondant (5) de la surface de formage (21).

10. Procédé selon la revendication précédente, dans lequel les pré-bords sont formés de telle sorte qu'après le préformage de la structure stratifiée de feuilles (2), une courbure de la première surface principale (11) de la structure stratifiée de feuilles (2) est provoquée à l'emplacement correspondant au bord (5) respectif avec un rayon (R1, R2) qui correspond à au moins une épaisseur (d) de la structure stratifiée de feuilles (2), de préférence à au moins le double de l'épaisseur (d) de la structure stratifiée de feuilles (2).

11. Procédé selon l'une quelconque des revendications précédentes, dans lequel une dimension maximale (I) de la structure stratifiée de feuilles (2) est au moins 10 fois, de préférence au moins 20 fois, de manière encore davantage préférée au moins 30 fois, supérieure à une dimension minimale (D) de la structure stratifiée.

12. Panneau composite en matière plastique (1) en une structure stratifiée, présentant
au moins une structure stratifiée de feuilles (2) composée d'au moins deux feuilles en matière plastique transparentes (2a, 2c) et d'au moins une couche d'adhésif transparente (2b) agencée entre respectivement deux feuilles en matière plastique (2a, 2c) et reliant respectivement les deux feuilles en matière plastique (2a, 2c) par accouplement de matière, la structure stratifiée de feuilles (2) définissant deux surfaces principales extérieures (11, 12) opposées dans la direction d'empilement de ses couches, une première surface principale (11) étant une surface principale exposée ;
une couche de thermoplastique (3) en un thermoplastique transparent, agencée de manière adjacente aux deuxièmes surfaces principales (12) de la structure stratifiée de feuilles (2), de préférence reliée à la structure stratifiée de feuilles (2) par accouplement de matière ;
**caractérisé en ce que**
au moins l'une des feuilles en matière plastique (2a, 2c) est munie d'un revêtement métallique translucide et **en ce que** la structure stratifiée de feuilles (2) est formée de telle sorte que ses couches forment un ou plusieurs contours tridimensionnels (4) qui sont formés par des surfaces planes, disposées en angle les unes par rapport aux autres, contiguës les unes aux autres par des bords rectilignes (5).

13. Panneau composite en matière plastique (1) selon la revendication précédente, dans lequel, dans la zone des bords (5) formant respectivement le contour (5), la structure stratifiée de feuilles (2) présente un rayon inférieur à 0,1 mm, de préférence égal à 0,08 mm ou moins.

14. Panneau composite en matière plastique (1) selon l'une quelconque des revendications 12 ou 13 précédentes, dans lequel une dimension maximale (I) de la structure stratifiée de feuilles (2) est au moins 10 fois, de préférence au moins 20 fois, de manière encore davantage préférée au moins 30 fois, supérieure à une dimension minimale (D) de la structure stratifiée.

15. Agencement (10) composé du panneau composite en matière plastique (1) selon l'une quelconque des revendications 12 à 14 précédentes et d'un moyen d'éclairage pour le rétroéclairage ou l'éclairage par transparence du panneau composite en matière plastique (1), la première surface principale (11) de la structure stratifiée de feuilles (2) étant tournée vers le moyen d'éclairage.

16. Utilisation du panneau composite en matière plastique (1) selon l'une quelconque des revendications 10 à 14 précédentes dans un véhicule automobile.
